# EUROPEAN PATENT APPLICATION

(11) **EP 4 332 160 A1**
(43) Date of publication of application: **06.03.2024**
(21) Application number: 23775186.2
(22) Date of filing: 27.02.2023
(51) Int. Cl.: C08K 5/00, C08K 5/3432, C08K 5/11, C08L 67/04

(54) **POLYLACTIDE RESIN COMPOSITION HAVING EXCELLENT CRYSTALLINITY, AND METHOD FOR PREPARING SAME**

(30) Priority: 22.03.2022 KR 20220035554
(71) Applicant: LG Chem, Ltd., Seoul 07336 (KR)
(72) Inventor: AN, Yujin, Daejeon 34122 (KR); CHO, Jeong Hun, Daejeon 34122 (KR); SUNG, Minchang, Daejeon 34122 (KR); OH, Wan Kyu, Daejeon 34122 (KR)
(74) Representative: Goddar, Heinz J.
(86) International application number: PCT/KR2023/002705
(87) International publication number: WO 2023/182688

(57) **Abstract**

The present disclosure relates to a polylactide resin composition prepared by combining specific nucleating agents and heat-treating them, which is characterized by having an excellent crystallinity degree.

## Description

### [TECHNICAL FIELD]

### CROSS-REFERENCE TO RELATED APPLICATION(S)

This application claims the benefit of Korean Patent Application No. 10-2022-0035554 filed on March 22, 2022 with the Korean Intellectual Property Office, the disclosure of which is incorporated herein by reference in its entirety.

The present invention relates to a polylactide resin composition excellent in crystallinity degree, and a method for preparing the same.

### [BACKGROUND ART]

Polylactide (or polylactic acid; PLA) resin is prepared based on biomass materials, and is an eco-friendly material which emits less global warming gas carbon dioxide during the production process, and is degraded by a specific temperature and composting facility. In recent years, it has also attracted attention as one of the materials that can replace existing crude oilbased resins as a measure for the upcycling of waste plastics and regulation on carbon emissions.

In addition, the polylactide resin has the advantages of being inexpensive compared to other biodegradable polymers and having high tensile strength and modulus properties.

However, the polylactide resin has a problem that a rigid polymer main chain is repeated in short units, the crystallization rate is slow due to slow chain mobility, and the molding cycle is long, thereby lowering the productivity. Therefore, in order to improve these problems, many studies are being conducted to introduce a material such as a nucleating agent to improve productivity and heat resistance.

In general, the materials used as the nucleating agents are mainly inorganic nucleating agents, and it has been reported that materials such as talc, mica, and nanoclay are used, and some of them are added during PLA molding, thereby capable of improving heat resistance and strength.

However, if such a nucleating agent is added in an excessive amount, there is a problem that the specific gravity of the resin increases and the transparency decreases. On the other hand, as a material that improves the crystallinity degree and transparency, organic nucleating agents such as LAK 301 (aromatic sulfonate derivative), sodium benzoate, N-aminophthalimide, phthalhydrazide, and cadmium phenylmalonate are used. However, these materials are not bio-based materials, and have dispersion problems with PLA resins.

Therefore, there is a need to introduce bio-based organic nucleating agents that can be prepared in eco-friendly products and, at the same time, do not impair transparency. In addition, there is a need to introduce a nucleating agent having less dispersion problems with the polylactide resin to further improve the crystallinity degree of the polylactide resin.

### [DETAILED DESCRIPTION OF THE INVENTION]

### [Technical Problem]

It is an object of the present disclosure to provide a polylactide resin composition excellent in crystallinity degree by using in combination with a specific nucleating agent.

It is another object of the present disclosure to provide a method for preparing the polylactide resin composition.

### [Technical Solution]

In order to achieve the above object, according to the present disclosure, there is provided the following polylactide resin composition:
A polylactide resin composition in which a polylactide resin composition comprising a polylactide resin; a first nucleating agent; and a second nucleating agent is heat-treated at 25 to 120°C for 1 to 30 minutes,
wherein the first nucleating agent is uracil or orotic acid, and
wherein the second nucleating agent is a compound containing a lactide oligomer structure.

As used herein, the term "polylactide resin" is defined to comprehensively refer to a homopolymer or copolymer including a repeating unit represented by the following Chemical Formula.

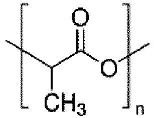

The polylactide resin can be prepared by a process including a step of forming the above repeating unit by the ring opening polymerization of the lactide monomer. The polymer obtained after the completion of such ring opening polymerization and the formation of the repeating unit can be referred to as the "polylactide resin".

At this time, the term "lactide monomer" can be defined as follows. Typically, lactides can be classified into L-lactide consisting of L-lactic acid, D-lactide consisting of D-lactic acid, and meso-lactide consisting of an L-type and a D-type. Also, a mixture of L-lactide and D-lactide in a ratio of 50:50 is referred to as D,L-lactide or rac-lactide. Among these lactides, the polymerization proceeding only with either of L-lactide and D-lactide that have a high level of optical purity is known to yield an L- or D-polylactide (PLLA or PDLA) with a high level of stereoregularity. Such polylactides have a faster crystallization rate and also a higher crystallinity degree than a polylactide having a low level of optical purity. However, the term "lactide monomer" is defined to include all types of lactides regardless of the characteristic differences of lactides depending on their types and the characteristic differences of the polylactide resins obtained therefrom.

Meanwhile, the polylactide resin composition according to the present disclosure has a weight average molecular weight of 70,000 to 400,000 as an example.

The present disclosure is characterized in that such a polylactide resin is used in combination of the first nucleating agent and the second nucleating agent, and such a composition is heat-treated at a specific temperature for a specific time to thereby improve the crystallinity degree of the polylactide resin.

Preferably, the heat treatment temperature is 30°C or more, 40°C or more, 50°C or more, 60°C or more, 70°C or more, 80°C or more, or 90°C or more; and 115°C or less, or 110°C or less. Most preferably, the heat treatment temperature is 90 to 110°C.

Preferably, the heat treatment time is 2 minutes or more, or 3 minutes or more; and 25 minutes or less, 20 minutes or less, 15 minutes or less, 10 minutes or less, or 5 minutes or less. Most preferably, the heat treatment time is 3 to 5 minutes.

The first nucleating agent is uracil or orotic acid. The first nucleating agent is a bio-based organic material, and is added to the polylactide resin, acts as a nucleation site and induces the crystal nucleus generation at high temperature, thereby capable of improving the crystallization rate.

Preferably, the first nucleating agent is contained in an amount of 0.1 to 5% by weight based on the total weight of the polylactide resin composition. If the content is less than 0.1% by weight, the effect due to the use of the first nucleating agent is insignificant, and if the content exceeds 5% by weight, there is a risk of impairing physical properties inherent in the polylactide resin. More preferably, the first nucleating agent is contained in an amount of 0.2% by weight or more, 0.3% by weight or more, 0.4% by weight or more, or 0.5% by weight or more; and 4.5% by weight or less, 4.0% by weight or less, or 3.5% by weight or less.

The second nucleating agent is a nucleating agent containing an oligomer structure of the lactide monomer. Due to the oligomer structure of the lactide monomer, it has high compatibility with the polylactide resin, and is added to the polylactide resin to play a role similar to that of a plasticizer. Thereby, a free volume can be formed in the polylactide resin to thereby enhance the chain mobility of the polylactide resin and increase the crystallinity degree.

Preferably, the second nucleating agent is a compound represented by the following Chemical Formula 1: 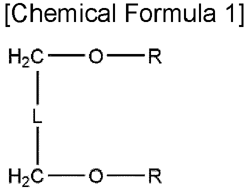 wherein, in Chemical Formula 1,
L is any one selected from the group consisting of: 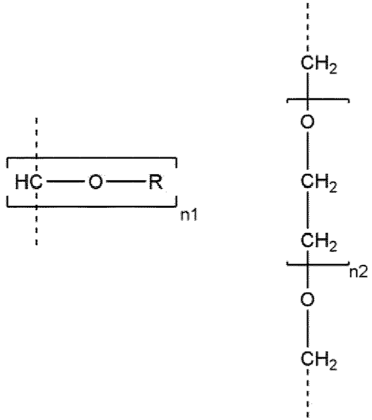 wherein,
n1 is an integer of 1 to 4,
n2 is an integer of 1 to 30, and
R is a substituent represented by the following Chemical Formula 2, 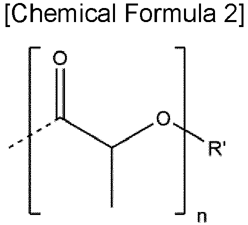 wherein,
   n represents the number of repeating units, and
   R' is hydrogen or acetyl.

The weight average molecular weight of the second nucleating agent may be adjusted according to the number of each lactide repeating unit. Preferably, the weight average molecular weight of the second nucleating agent is 1,000 to 50,000. More preferably, the weight average molecular weight of the second nucleating agent is 1,100 or more, 1,200 or more, 1,300 or more, 1,400 or more, or 1,500 or more; and 40,000 or less, 30,000 or less, 20,000 or less, 10,000 or less, 9,000 or less, or 8,000 or less.

Preferably, the second nucleating agent is contained in an amount of 3 to 25% by weight based on the total weight of the polylactide resin composition. If the content is less than 3% by weight, the effect due to the use of the second nucleating agent is insignificant, and if the content exceeds 25% by weight, there is a risk of impairing the physical properties inherent in the polylactide resin. More preferably, the second nucleating agent is contained in an amount of 3.5% by weight or more, 4.0% by weight or more, or 4.5% by weight or more; and 24% by weight or less, 23% by weight or less, 22% by weight or less, or 21% by weight or less.

Meanwhile, the method for preparing the above-mentioned polylactide resin composition according to the present disclosure comprises the steps of: 1) preparing the above-mentioned polylactide resin composition (step 1), and 2) heat-treating the polylactide resin composition prepared in step 1 at 25 to 120°C for 1 to 30 minutes (step 2). At this time, the heat treatment temperature and time of step 2 are the same as described above.

### [Advantageous Effects]

The above-mentioned polylactide resin composition according to the present disclosure is excellent in crystallinity degree and thus, can maintain the properties inherent in the polylactide resin according to the present disclosure while having excellent processability.

### [DETAILED DESCRIPTION OF THE EMBODIMENTS]

Below, embodiments of the present disclosure will be described in more detail with reference to examples. However, the following examples are for illustrative purposes only and are not intended to limit the scope of the present disclosure.

### Preparation Example 1: Preparation of Second Nucleating Agent (P10-A-oligomer)

An oligomer was prepared using PEG-1000 (P10) as an initiator. Specifically, lactide and P10 were added in a 20 mL vial at a molar ratio of 16:1 so that the total was 4.5 g, and Sn(Oct)₂ catalyst was added in amount to be 0.1 to 0.2 wt.%, and then reacted at 130°C for 4 hours. After adjusting the temperature to 120°C, acetic anhydride (4 equivalents relative to the terminal OH group) was added, and further reacted for 12 hours. After completion of the reaction, acetic acid as a byproduct and residual acetic anhydride were removed by vacuum drying to prepare a second nucleating agent having a structure in which the terminal group was substituted with an acetyl group, which was named P10-A-002, and the weight average molecular weights are shown in Tables 1 to 3 below.

### Preparation Example 2: Preparation of Second Nucleating Agent (SB-oligomer)

An oligomer was prepared using sorbitol (SB) as an initiator. Specifically, lactide and SB were added in a 20 mL vial at a molar ratio of 24:1 so that the total was 4.5 g, and Sn(Oct)₂ catalyst was added in amount to be 0.1 to 0.2 wt.%, and then reacted at 130°C for 4 hours. After vacuum drying, the reaction mixture was cooled to room temperature to prepare a second nucleating agent, which was named SB-O-002, and the weight average molecular weight is shown in Tables 1 to 3 below.

### Example and Comparative Example

65 g of PLA pellet (4032D from NatureWorks; weight average molecular weight of about 200,000) and the first nucleating agent shown in Tables 1 to 3 below were mixed according to their contents. This was placed in a Haake mixer and mixed at 180°C for 5 minutes at 60 rpm. The second nucleating agent shown in Table 1 was added thereto according to their contents, and mixed at 180°C for 5 minutes at 60 rpm. At this time, in Tables 1 to 3 below, the content of the first nucleating agent and the second nucleating agent refer to wt.% based on the total content of the PLA resin, the first nucleating agent, and the second nucleating agent.

The mixture was placed in a vacuum oven and dried at a temperature of 85°C for 4 hours. This was placed in a convection oven, and heat-treated for the temperature and time shown in Tables 1 to 3 below to prepare a polylactide resin composition.

### Experimental Example

The physical properties of the first nucleating agent, second nucleating agent, and polylactide resin composition prepared above were measured by the following methods.

### 1) Weight average molecular weight

The number average molecular weight (Mn) and the weight average molecular weight (Mw) were calculated using a GPC (Gel Permeation Chromatography) device, and the oligomer molecular weight distribution (Mw/Mn) was measured, and specific measurement conditions are as follows.
- Column: PLgel Mixed E x 2
- Solvent: THF
- Flow rate: 0.7 mL/min
- Sample concentration: 3.0 mg/mL
- Injection volume: 100 µl
- Column temperature: 40°C
- Detector: Waters 2414 RID
- Standard: PS (Polystyrene)

### 2) DSC (Differential scanning calorimetry)

In order to confirm the effect from the annealing thermal history of samples of PLA blends, the crystallinity degree analysis during the first temperature rising was performed. DSC was measured by heating up to 250°C, which is equal to or higher than the melting temperature of PLA, at a heating rate of 10°C/min. ΔHm, which is a melting peak during the temperature rising, was confirmed, and the crystallinity degree X was calculated using the following Equation (100% crystalline PLA ΔHm = 93 J/g).
- 1st Run crystallinity degree: (Area of endothermic peak in 1st thermogram, ΔHm) / (100% crystalline PLA ΔHm) * 100

**[Table 1]**

| Item | Nucleating agent | | | Heat treatment temperature (°C) | Heat treatment time (min) | DSC, 1^{st} temperature rising | | |
|---|---|---|---|---|---|---|---|---|
| | 1^{st} nucleating agent (wt.%) | 2^{nd} nucleating agent (wt.%) | | | | Tcc (°C) | Tm (°C) | Xc (%) |
| | | Type | Mw | | | | | |
| Comparative Example 1 | - | - | - | 25 | 30 | 111.8 | 169.4 | 5.0 |
| Comparative Example 2 | | | | 90 | 30 | 113.3 | 169.7 | 4.2 |
| Comparative Example 3 | | | | 110 | 30 | - | 168.9 | 33.6 |
| Comparative Example 4 | D-sorbitol (1w%) | - | - | 25 | 30 | 108.3 | 169.4 | 4.3 |
| Comparative Example 5 | | | | 90 | 30 | 94.6 | 167.7 | 25.0 |
| Comparative Example 6 | | | | 110 | 30 | - | 168.2 | 34.2 |
| Comparative Example 7 | Uracil (1w%) | - | - | 25 | 30 | 108.8 | 169.8 | 4.7 |
| Comparative Example 8 | | | | 90 | 30 | 98.3 | 168.1 | 32.7 |
| Comparative Example 9 | | | | 110 | 30 | - | 168.4 | 33.9 |
| Comparative Example 10 | Orotic acid (1w%) | - | - | 25 | 30 | 107.5 | 169.0 | 4.6 |
| Comparative Example 11 | | | | 90 | 30 | 104.0 | 167.4 | 35.3 |
| Comparative Example 12 | | | | 110 | 30 | - | 167.9 | 33.7 |
| Example 1 | Uracil (1w%) | SB-O-002 (3w%) | 5,700 | 25 | 30 | 111.8 | 169.5 | 3.7 |
| Example 2 | | | | 90 | 30 | 97.4 | 167.9 | 21.9 |
| Example 3 | | | | 110 | 30 | - | 169.1 | 35.4 |

**[Table 2]**

| Item | Nucleating agent | | | Heat treatment temperature (°C) | Heat treatment time (min) | DSC, 1^{st} temperature rising | | |
|---|---|---|---|---|---|---|---|---|
| | 1st nucleating agent (wt.%) | 2^{nd} nucleating agent (wt.%) | | | | Tcc (°C) | Tm (°C) | Xc (%) |
| | | Type | Mw | | | | | |
| Comparative Example 13 | D-sorbitol (3w%) | - | - | 25 | 30 | 106.1 | 168.4 | 9.8 |
| Comparative Example 14 | | | | 90 | 30 | 96.5 | 168.0 | 32.5 |
| Comparative Example 15 | | | | 110 | 30 | - | 167.9 | 35.2 |
| Comparative Example 16 | Uracil (3w%) | - | - | 25 | 30 | 111.1 | 169.9 | 3.1 |
| Comparative Example 17 | | | | 90 | 30 | 98.9 | 168.6 | 24.4 |
| Comparative Example 18 | | | | 110 | 30 | - | 169.2 | 33 |
| Comparative Example 19 | Orotic acid (3w%) | - | - | 25 | 30 | - | 169.9 | 35 |
| Comparative Example 20 | | | | 90 | 30 | 96.0 | 168.3 | 32.4 |
| Comparative Example 21 | | | | 110 | 30 | - | 168.3 | 34.5 |
| Example 4 | Uracil (3w%) | P10-A-002 (5w%) | 6,000 | 25 | 30 | 101.1 | 167.9 | 11.7 |
| Example 5 | | | | 90 | 30 | - | 168.0 | 37.5 |
| Example 6 | | | | 110 | 30 | - | 167.8 | 36.6 |
| Example 7 | Uracil (3w%) | P10-A-002 (10w%) | 6,000 | 25 | 30 | 90.8 | 167.6 | 37.1 |
| Example 8 | | | | 90 | 30 | - | 163.7 | 42.2 |
| | | | | | | | 168.5 | |
| Example 9 | | | | 110 | 30 | - | 167.7 | 39.1 |
| Example 10 | Orotic acid (3w%) | P10-A-002 (5w%) | 6,000 | 25 | 30 | | 169.1 | 38.5 |
| Example 11 | | | | 90 | 30 | - | 169.0 | 37.4 |
| Example 12 | | | | 110 | 30 | - | 167.3 | 34.8 |
| Example 13 | Orotic acid (3w%) | P10-A-002 (10w%) | 6,000 | 25 | 30 | - | 168.6 | 40.4 |
| Example 14 | | | | 90 | 30 | - | 163.6 | 39.8 |
| Example 15 | | | | 110 | 30 | - | 167.8 | 39 |

**[Table 3]**

| Item | Nucleating agent | | | Heat treatment temperature (°C) | Heat treatment time (min) | DSC, 1^{st} temperature rising | | |
|---|---|---|---|---|---|---|---|---|
| | 1st nucleating agent (wt.%) | 2^{nd} nucleating agent (wt.%)) | | | | Tcc (°C) | Tm (°C) | Xc (%) |
| | | Type | Mw | | | | | |
| Comparativ e Example 22 | - | - | - | 110 | 30 | - | 168.9 | 33.6 |
| Comparativ e Example 23 | | | | | 1 | 119.1 | 167.2 | 1.9 |
| Comparativ e Example 24 | | | | | 3 | 113.5 | 169.3 | 4.2 |
| Comparativ e Example 25 | | | | | 5 | 102.8 | 169.1 | 31.1 |
| Example 16 | Uracil (3w%) | P10-A-002 (5w%) | 6,000 | 110 | 30 | - | 167.8 | 36.6 |
| Example 17 | | | | | 1 | 96.6 | 167.3 | 18.4 |
| Example 18 | | | | | 3 | - | 167.5 | 34 |
| Example 19 | | | | | 5 | - | 167.4 | 36.7 |
| Example 20 | Uracil (3w%) | P10-A-002 (10w%) | 6,000 | 110 | 30 | - | 167.7 | 39.1 |
| Example 21 | | | | | 1 | | 168.5 | 38.9 |
| Example 22 | | | | | 3 | - | 164.2 | 43 |
| Example 23 | | | | | 5 | - | 165.1 | 42.3 |
| Example 24 | Orotic acid (3w%) | P10-A-002 (5w%) | 6,000 | 110 | 30 | - | 167.3 | 34.8 |
| Example 25 | | | | | 1 | - | 167.3 | 33.6 |
| Example 26 | | | | | 3 | - | 169.2 | 39.7 |
| Example 27 | | | | | 5 | - | 168.6 | 39.2 |
| Example 28 | Orotic acid (3w%) | P10-A-002 (10w%) | 6,000 | 110 | 30 | - | 167.8 | 39 |
| Example 29 | | | | | 1 | - | 164.4 | 44 |
| Example 30 | | | | | 3 | - | 168.5 | 41.5 |
| Example 31 | | | | | 5 | - | 163.7 | 43.7 |

As shown in Tables 1 to 3, it was confirmed that in the case of Examples where the first nucleating agent and the second nucleating agent were used simultaneously according to the present disclosure, the crystallization temperature and crystallinity degree were also improved even with a small content.

## Claims

1. A polylactide resin composition in which a polylactide resin composition comprises a polylactide resin; a first nucleating agent; and a second nucleating agent, and is heat-treated at 25 to 120°C for 1 to 30 minutes,
wherein the first nucleating agent is uracil or orotic acid, and
wherein the second nucleating agent is a compound containing a lactide oligomer structure.

2. The polylactide resin composition of claim 1, wherein:
the heat treatment temperature is 90 to 110°C.

3. The polylactide resin composition of claim 1, wherein:
the heat treatment time is 3 to 5 minutes,

4. The polylactide resin composition of claim 1, wherein:
a crystallinity degree of the polylactide resin composition is 30% or more.

5. The polylactide resin composition of claim 1, wherein:
a weight average molecular weight of the polylactide resin is 70,000 to 400,000.

6. The polylactide resin composition of claim 1, wherein:
the first nucleating agent is contained in an amount of 0.1 to 5% by weight based on the total weight of the polylactide resin composition.

7. The polylactide resin composition of claim 1, wherein:
the first nucleating agent is contained in an amount of 0.5 to 3.5% by weight based on the total weight of the polylactide resin composition.

8. The polylactide resin composition of claim 1, wherein:
the second nucleating agent is a compound represented by the following Chemical Formula 1: 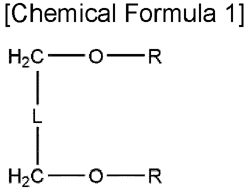 wherein, in Chemical Formula 1,
L is any one selected from the group consisting of: 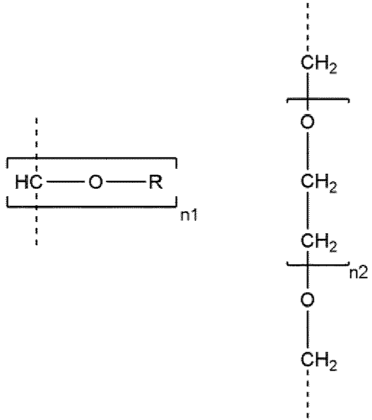 wherein,
n1 is an integer of 1 to 4,
n2 is an integer of 1 to 30, and
R is a substituent represented by the following Chemical Formula 2, 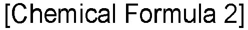 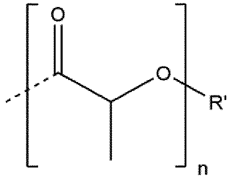 wherein,
n represents the number of repeating units, and
R' is hydrogen or acetyl.

9. The polylactide resin composition of claim 1, wherein:
a weight average molecular weight of the second nucleating agent is 1,000 to 50,000.

10. The polylactide resin composition of claim 1, wherein:
the second nucleating agent is contained in an amount of 3 to 25% by weight based on the total weight of the polylactide resin composition.

11. The polylactide resin composition of claim 1, wherein:
the second nucleating agent is contained in an amount of 4.5 to 21% by weight based on the total weight of the polylactide resin composition.

12. A method for preparing the polylactide resin composition according to any one of claims 1 to 11, the method comprising the steps of:
1) mixing a polylactide resin; a first nucleating agent; and a second nucleating agent to prepare a polylactide resin composition (step 1), and
2) heat-treating the polylactide resin composition prepared in step 1 at 80 to 120°C for 1 to 10 minutes (step 2),
wherein the first nucleating agent is uracil or orotic acid, and
wherein the second nucleating agent is a compound containing a lactide oligomer structure.
